# EUROPÄISCHE PATENTSCHRIFT

(11) **EP 0 812 727 B1**
(45) Veröffentlichungstag und Bekanntmachung des Hinweises auf die Patenterteilung: **15.12.1999**
(21) Anmeldenummer: 97107756.5
(22) Anmeldetag: 13.05.1997
(51) Int. Cl.: B60R 1/06

(54) **Aussenrückblickspiegel für Fahrzeuge, insbesondere für Kraftfahrzeuge**
Exterior rear-view mirror for vehicles, especially for motor vehicles
Rétroviseur extérieur pour véhicules, en pariculier pour véhicules à moteur

(30) Priorität: 13.06.1996 DE 29610374 U
(43) Veröffentlichungstag der Anmeldung: 17.12.1997
(73) Patentinhaber: REITTER & SCHEFENACKER GmbH & Co. KG, D-73730 Esslingen (DE)
(72) Erfinder: Waldmann, Bernd, 73733 Esslingen (DE); Zimmermann, Werner, 73113 Ottenbach (DE)
(74) Vertreter: Kohl, Karl-Heinz

(56) Entgegenhaltungen:
- EP-A- 0 438 814
- EP-A- 0 442 353
- EP-A- 0 550 185
- EP-A- 0 614 782
- DE-A- 4 204 621

## Beschreibung

Die Erfindung betrifft einen Außenrückblickspiegel für Fahrzeuge, insbesondere für Kraftfahrzeuge, nach dem Oberbegriff des Anspruches 1.

Ein derartiger Außenrückspiegel ist aus EP-A-0 442 353 bekannt.

Der Spiegelfuß und das Spiegelgehäuse eines Außenrückblickspiegels werden aus Kunststoff hergestellt, insbesondere aus einem Thermoplast. Häufig sind der Spiegelfuß und das Spiegelgehäuse schwarz gehalten, so daß ein solcher Außenrückblickspiegel aufgrund seiner Farbneutralität an Fahrzeuge unterschiedlichster Farben montiert werden kann. Soll der Außenrückblickspiegel in einem zum Farbton des Fahrzeuges passenden Ton gehalten werden, werden der Spiegelfuß und das Spiegelgehäuse mit einem entsprechenden Lack überzogen. Für den Lackauftrag ist ein zusätzlicher Arbeitsschritt erforderlich. Mit zunehmender Gebrauchsdauer verwittert der Lack oder erhält Kratzer und dergleichen.

Der Erfindung liegt die Aufgabe zugrunde, den gattungsgemäßen Außenrückblickspiegel so auszubilden, daß sein Spiegelfuß und sein Spiegelgehäuse in einfacher Weise an den Farbton des jeweiligen Fahrzeuges angepaßt werden können.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel enthält der Thermoplast das Lichtschutzmittel sowie das Farbmittel. Dadurch können der Spiegelfuß und das Spiegelgehäuse sehr einfach in ihrer Farbgebung auf den Farbton des Fahrzeuges abgestimmt werden, an dem der Außenrückblickspiegel montiert werden muß. Das Lichtschutzmittel gewährleistet die Farbbeständigkeit während der Lebensdauer des Außenrückblickspiegels. Für die Einfärbung des Außenrückblickspiegels ist kein gesonderter Fertigungsschritt erforderlich, da die Farb- und Lichtschutzmittel zusammen mit dem jeweiligen Thermoplast verarbeitet werden können. Da der Kunststoff im entsprechenden Ton eingefärbt ist, besteht auch nicht das Problem der Verwitterung und/oder Beschädigung einer zusätzlich aufzubringenden Farbschicht.

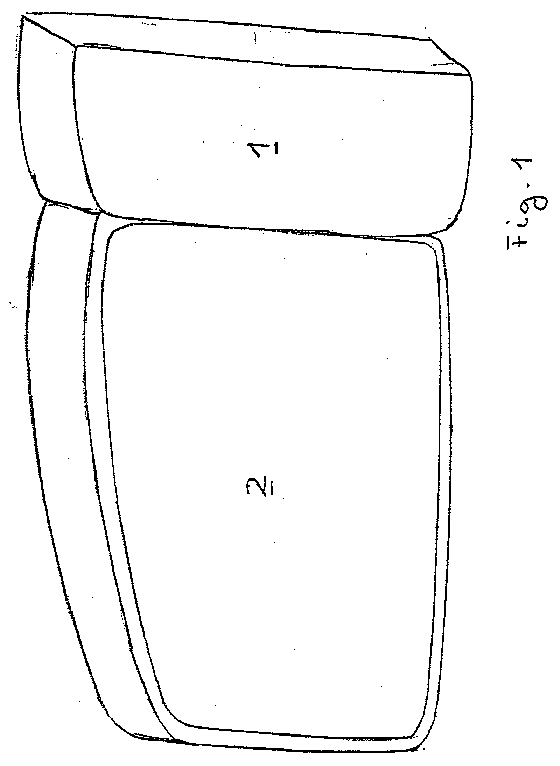

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt in perspektivischer Darstellung einen erfindungsgemäßen Außenrückblickspiegel. Er hat einen Spiegelfuß 1, mit dem der Außenrückblickspiegel in bekannter Weise am Fahrzeug befestigt wird. Der Spiegelfuß 1 ist mit einem Spiegelgehäuse 2 verbunden, das vorzugsweise abklappbar an den Spiegelfuß 1 angeschlossen ist. Solche Abklappmechanismen sind bekannt und werden darum nicht näher erläutert. Das Spiegelgehäuse 2 kann bei einem Schlag in oder entgegen Fahrtrichtung gegenüber dem Spiegelfuß 1 wegschwenken.

Der Spiegelfuß 1 und das Spiegelgehäuse 2 bestehen aus thermoplastischem Kunststoff, vorzugsweise aus Polymethylmethacrylat (PMMA). Als weitere Thermoplaste kommen für den Spiegelfuß 1 und das Spiegelgehäuse 2 Polycarbonat und Acrylnitril-Butadien-Styrol-Copolymere (ABS) in Frage.

Dem Thermoplast werden Pigmente und/oder Farben im Bereich von etwa 0,05 % bis etwa 2 % zugegeben. Mit diesen Zusatzstoffen können der Spiegelfuß 1 und das Spiegelgehäuse 2 auf den Farbton des Fahrzeuges abgestimmt werden, an dem der Außenrückblickspiegel montiert werden soll. Zum Einfärben kommen anorganische oder organische Pigmente oder Farben in Betracht. Es werden solche Pigmente bzw. Farbstoffe verwendet, die eine hohe Lichtbeständigkeit haben. Dadurch ist sichergestellt, daß sich der Farbton des Spiegelfußes und des Spiegelgehäuses 2 mit der Zeit nicht ändert. Die Lichtbeständigkeit ist bei anorganischen natürlichen Pigmenten am größten, wie Eisenoxid, Titanoxid, Siena, Ocker und dergleichen (gebrannte Erden, Metalloxide). Durch eine geeignete Mischung der unterschiedlichen Pigmente und/oder Farbstoffe kann die gewünschte Lichtbeständigkeit einfach eingestellt werden.

Es werden Lichtschutzmittel zugegeben, die mittel- und langfristig die UV-Beständigkeit verbessern. Es empfiehlt sich die Zugabe von Lichtschutzmitteln in der Größenordnung von etwa 0,05 % bis etwa 1 %. Als vorteilhafte Lichtschutzmittel kommen Benztriazole in Frage.

Die Gefahr, daß durch Abrieb die Thermoplaste so geschädigt werden, daß Füllstoffe und Farbstoffe frei werden, besteht bei PMMA weniger, bei anderen Thermoplasten mehr. Als Abriebfestiger können Füllmittel eingesetzt werden.

Vorteilhaft werden mineralische Füllstoffe, wie Kalziumcarbonat, Silikat, Wollastenit und dergleichen verwendet. Solche Füllmittel können in der Größenordnung von etwa 10 % bis etwa 40 % dem jeweiligen Thermoplast zugegeben werden.

Ein höherer Schutz gegen Abrieb wird erreicht, wenn auf den Spiegelfuß 1 bzw. auf das Spiegelgehäuse 2 eine Schutzlackierung aufgebracht wird. Es werden vorteilhaft Lacke auf Acrylbasis oder auf UV-härtenden Systemen aus mehreren Komponenten verwendet.

Zur Verbesserung der Schlagfestigkeit können den Thermoplasten Schlagfestverbesserer (Impact modifier) zugegeben werden. Die Schlagfestverbesserer sind auf Elastomerbasis hergestellt und speziell auf den zu festigenden Thermoplast zugeschnitten. Die Schlagfestverbesserer können den Thermoplasten in einer Größenordnung zwischen etwa 4 % und etwa 35 % zugegeben werden. Bei Verwendung von Polymethacrylat wird bevorzugt Butylacrylat als Schlagfestverbesserer eingesetzt. Dieses Modifiziersystem hat eine hervorragende UV-Strahlungsbeständigkeit.

Zur Einstellung des Verarbeitungs- und Gebrauchsverhaltens der einzelnen Komponenten können Gleitmittel, Antistatika, Vernetzer, Antioxidantien, Formtrennmittel, Metalldesaktivatoren und dergleichen eingearbeitet werden.

Mit der beschriebenen Mischung können der Spiegelfuß 1 und das Spiegelgehäuse 2 aus einem in der Wagenfarbe eingefärbten Material gefertigt werden. Es ist darum nicht mehr erforderlich, den Außenrückblickspiegel in der Wagenfarbe zu lackieren. Aufgrund der in der Kunststoffmasse enthaltenen Lichtschutzmittel weist das Material eine hohe Licht- und UV-Beständigkeit auf, so daß auch nach langer Einsatzdauer sichergestellt ist, daß sich der Farbton des Außenrückblickspiegels nicht in unzulässiger Weise verändert.

## Patentansprüche

1. Außenrückblickspiegel für Fahrzeuge, insbesondere für Kraftfahrzeuge, mit einem Spiegelfuß und einem Spiegelgehäuse, die aus mindestens einem Thermoplast hergestellt sind,
dadurch gekennzeichnet, daß der Thermoplast zwischen etwa 0,05 % bis etwa 1 % mindestens eines Lichtschutzmittels und zwischen etwa 0,05 % bis etwa 2 % wenigstens eines Farbmittels enthält.

2. Außenrückblickspiegel nach Anspruch 1,
dadurch gekennzeichnet, daß der Thermoplast ein Polymethylmethacrylat (PMMA) ist.

3. Außenrückblickspiegel nach Anspruch 1,
dadurch gekennzeichnet, daß der Thermoplast ein Polycarbonat ist.

4. Außenrückblickspiegel nach Anspruch 1,
dadurch gekennzeichnet, daß der Thermoplast ein Acrylnitril-Butadien-Styrol-Copolymer ist.

5. Außenrückblickspiegel nach einem der Ansprüche 1 bis 4,
dadurch gekennzeichnet, daß das Farbmittel durch anorganische Pigmente, vorzugsweise Metalloxide, wie Eisenoxid, Titanoxid und/oder gebrannten Erden, wie Ocker oder Siena, gebildet ist.

6. Außenrückblickspiegel nach einem der Ansprüche 1 bis 4,
dadurch gekennzeichnet, daß das Farbmittel durch organische Pigmente, wie Indigo, Sepia und dergleichen, gebildet ist.

7. Außenrückblickspiegel nach einem der Ansprüche 1 bis 6,
dadurch gekennzeichnet, daß dem Thermoplast Füllmittel zwischen etwa 10 % und etwa 40 % zugegeben ist, das vorzugsweise aus mineralischen Stoffen, wie Kalziumcarbonat, Silikat, Wollastenit und dergleichen, besteht.

8. Außenrückblickspiegel nach einem der Ansprüche 1 bis 7,
dadurch gekennzeichnet, daß der Spiegelfuß (1) und das Spiegelgehäuse (2) mit einer Schutzlackierung, wie einem durch Lacke auf Acrylatbasis oder durch UV-härtende Systeme gebildeten Schutzlack, versehen ist.

9. Außenrückblickspiegel nach einem der Ansprüche 1 bis 8,
dadurch gekennzeichnet, daß dem Thermoplast Schlagfestverbesserer zwischen etwa 4 % und etwa 35 % zugesetzt sind, die vorzugsweise aus einer Elastomerbasis bestehen.

10. Außenrückblickspiegel nach einem der Ansprüche 1 bis 9,
dadurch gekennzeichnet, daß dem Thermoplast Zusatzstoffe, wie Gleitmittel, Antistatika, Vernetzer, Antioxidantien, Formtrennmittel, Metalldesaktivatoren und dergleichen, zugesetzt sind.

## Claims

1. An external rear-view mirror for vehicles, in particular for motor vehicles, with a mirror base and a mirror casing which are produced from at least one thermoplastic material, **characterized in that** the thermoplastic material contains between about 0^{.}05% [and] about 1% of at least one light-protecting agent and between about 0^{.}05% [and] about 2% of at least one colouring agent.

2. An external rear-view mirror according to Claim 1, **characterized in that** the thermoplastic material is a polymethyl methacrylate (PMMA).

3. An external rear-view mirror according to Claim 1, **characterized in that** the thermoplastic material is a polycarbonate.

4. An external rear-view mirror according to Claim 1, **characterized in that** the thermoplastic material is an acrylonitrile-butadiene-styrene-copolymer.

5. An external rear-view mirror according to one of Claims 1 to 4, **characterized in that** the colouring agent is formed by inorganic pigments, preferably metallic oxides, such as iron oxide, titanium oxide, and/or burnt earths, such as ochre or siena.

6. An external rear-view mirror according to one of Claims 1 to 4, **characterized in that** the colouring agent is formed by organic pigments, such as indigo, sepia and the like.

7. An external rear-view mirror according to one of Claims 1 to 6, **characterized in that** a filler of between about 10% and about 40%, preferably consisting of mineral substances, such as calcium carbonate, silicate, wollastenite and the like, is added to the thermoplastic material.

8. An external rear-view mirror according to one of Claims 1 to 7, **characterized in that** the mirror base (1) and the mirror casing (2) [are] provided with a protective-lacquer coating, such as a protective lacquer formed by lacquers based on acrylate or by UV-hardening systems.

9. An external rear-view mirror according to one of Claims 1 to 8, **characterized in that** impact-modifiers of between about 4% and about 35%, which preferably comprise an elastomer base, are added to the thermoplastic material.

10. An external rear-view mirror according to one of Claims 1 to 9, **characterized in that** additives, such as lubricants, antistatic agents, cross-linking agents, antioxidant agents, releasing agents, metal de-activators and the like, are added to the thermoplastic material.

## Revendications

1. Rétroviseur extérieur pour véhicules, en particulier pour véhicules à moteur, comportant un pied de rétroviseur et un boîtier de rétroviseur qui sont constitués d'au moins un matériau thermoplastique,
caractérisé par le fait que le matériau thermoplastique contient environ 0,05% à environ 1% d'au moins un agent de protection contre la lumière et entre environ 0,05% à environ 2% d'au moins un colorant.

2. Rétroviseur extérieur selon la revendication 1,
caractérisé par le fait que le matériau thermoplastique est un polyméthylméthacrylate (PMMA).

3. Rétroviseur extérieur selon la revendication 1,
caractérisé par le fait que le matériau thermoplastique est un polycarbonate.

4. Rétroviseur extérieur selon la revendication 1,
caractérisé par le fait que le matériau thermoplastique est un copolymère acrylonitrile-butadiène-styrène.

5. Rétroviseur extérieur selon l'une des revendications 1 à 4,
caractérisé par le fait que le colorant est formé par des pigments inorganiques, de préférence des oxydes métalliques comme oxyde de fer, oxyde de titane et/ou des terres calcinées comme de l'ocre ou de la terre de Sienne.

6. Rétroviseur extérieur selon l'une des revendications 1 à 4,
caractérisé par le fait que le colorant est formé par des pigments organiques, comme indigo, sépia et analogues.

7. Rétroviseur extérieur selon l'une des revendications 1 à 6,
caractérisé par le fait qu'au matériau thermoplastique on ajoute entre environ 10% et environ 40% d'une charge qui est de préférence constituée de matières minérales comme carbonate de calcium, silicate, wollastonite et analogues.

8. Rétroviseur extérieur selon l'une des revendications 1 à 7,
caractérisé par le fait que le pied de rétroviseur (1) et le boîtier de rétroviseur (2) sont munis d'un laquage de protection comme d'une laque de protection formée par de la laque à base d'acrylate ou par des systèmes durcissant aux ultraviolets.

9. Rétroviseur extérieur selon l'une des revendications 1 à 8,
caractérisé par le fait qu'au matériau thermoplastique, on ajoute entre environ 4% et environ 35% d'améliorants de résistance au choc qui sont de préférence constitués d'une base élastomère.

10. Rétroviseur extérieur selon l'une des revendications 1 à 9,
caractérisé par le fait qu'au matériau thermoplastique, on ajoute des additifs comme des agents antifriction, des agents antistatiques des agents de réticulation, des anti-oxydants, des agents de décoffrage, des désactivateurs métalliques, et analogues.
